# EUROPÄISCHE PATENTSCHRIFT

(11) **EP 0 489 248 B1**
(45) Veröffentlichungstag und Bekanntmachung des Hinweises auf die Patenterteilung: **21.01.1998**
(21) Anmeldenummer: 91117805.1
(22) Anmeldetag: 18.10.1991
(51) Int. Cl.: G06F 5/06

(54) **Adress-Steuerung für einen First in- / First out-Speicher**
Address control for a first-in first-out memory
Commande d'adresse pour une mémoire à première entrée/première sortie

(30) Priorität: 01.12.1990 DE 4038328
(43) Veröffentlichungstag der Anmeldung: 10.06.1992
(73) Patentinhaber: GRUNDIG Aktiengesellschaft, 90762 Fürth (DE)
(72) Erfinder: Mahmud, Shabaz, Grundig E.M.V., Max Grundig, W-8510 Fuerth (DE); Ziegler, Cornelius, Grundig E.M.V., Max Grundig, W-8510 Fuerth (DE)

(56) Entgegenhaltungen:
- EP-A- 0 360 899
- US-A- 4 839 791
- US-A- 4 962 483
- PATENT ABSTRACTS OF JAPAN vol. 7, no. 228 (P-228)(1373) 8. Oktober 1983 & JP-A-58 117 044
- PROCEEDINGS OF THE 4TH ANNUAL SYMPOSIUM ON COMPUTER ARCHITECTURE, 23-25 MAERZ 1977. 1977, IEEE, NEW YORK, USA Seiten 159 - 164 A. PARKER 'HARDWARE/SOFTWARE TRADEOFFS IN A VARIABLE WORD WIDTH, VARIABLE QUEUE LENGTH BUFFER MEMORY'

## Beschreibung

Die Erfindung betrifft eine Adress-Steuerung zum gezielten Auslesen bzw. Einschreiben von Daten aus bzw. in vorbestimmbare Speicherbereiche eines First in-/First out-Speichers (FIFO), der einen Adresszeiger enthält, der aus einem Zähler besteht, welcher den zu bearbeitenden Speicherplatz des FIFO definiert.

Bei dieser Speicherform werden die einzelnen Speicherplätze nicht durch Adressen angesteuert, sondern der Einschreibvorgang bzw. der Lesevorgang erfolgt sequentiell, d.h. beim Einschreiben in den Speicher wird die Information jeweils in den nächsten freien Speicherplatz geschrieben, beim Auslesen wird zunächst das sich am längsten im Speicher befindliche Datenwort ausgelesen, anschließend das nächste, usw., so daß die Daten in der gleichen Reihenfolge ausgelesen werden, in der sie vorher eingeschrieben wurden. Ein Sprung auf einen entfernten Speicherplatz, d.h. Einschreiben oder Auslesen in beliebiger Reihenfolge ist bei einem FIFO nicht möglich.

Der Vorteil dieser Speicheranordnung liegt in der einfachen Struktur und der schnellen Zugriffszeit, so daß diese Speicherform eine breite Anwendung in Anordnungen findet, bei denen eine schnelle Zugriffszeit erforderlich ist und auf die Adressierung einzelner Speicherplätze verzichtet werden kann.

Aus der Druckschrift US 4 873 667 ist ein FIFO-Speicher bekannt, der aus einer Ansteuereinheit und einem Speicherbereich besteht. In der Ansteuereinheit sind für den Schreibvorgang und für den Lesevorgang Zähler vorgesehen, deren Zählergebnisse über einen Multiplexer - je nachdem ob eine Schreib- oder eine Leseanforderung vorliegt - an den Speicherbereich gegeben wird. Der Zählerwert der Zähler dient als Schreib- bzw. Leseadresse. Die Ansteuereinheit enthält weiterhin ein Schreib- und ein Leseregister. In diese Register wird bei Beendigung eines Schreib- oder Lesevorganges die zuletzt bearbeitete Adresse, d.h. der letzte Zählerstand, eingeschrieben und gespeichert.

Aus der Druckschrift US 4 962 483 ist eine FIFO-Speicheranordnung bekannt, die ebenfalls aus einer Ansteuereinheit und einem Speicherbereich besteht, wobei in dieser Druckschrift vorgesehen wird, daß durch die zentrale Steuereinheit (CPU) der Anordnung die Ansteuereinheit umgangen werden kann und ein direkter, adressierbarer Schreib-/Lesezugriff auf den Speicherbereich ermöglicht ist, wobei der Stand der Adresszähler beim direkten Zugriff unberücksichtigt bleibt.

Bei einer Anzahl von Anwendungen ist zwar nicht ein wahlfreier Zugriff auf einzelne Speicherplätze notwendig, aber der Zugriff auf einzelne Speicherplatzbereiche.

Vor allem im Bereich der Videotechnik gibt es eine Vielzahl von Anwendungen, bei denen beispielsweise Bildbereiche in einen Speicher abgelegt und ausgelesen werden, wobei innerhalb des Bildbereiches ein sequentielles Einschreiben oder Auslesen möglich ist, die Bildbereiche, d.h. die entsprechenden Speicherbereiche, aber frei zugänglich sein sollten.

In US-A-4839791 wird eine Anordnung beschrieben, in der jedem I/O Kanal ein Adressenbereich (Startadresse und Größe) in einem FIFO Speicher zugewiesen wird. Die Daten werden mittels eines Lesezeigers bzw Schreibzeigers aus bzw in den FIFO Bereich gelesen bzw geschrieben. Beide Zeiger werden durch Relativadressberechnungen erzeugt. Der Grenzenübergang des Adressenbereiches wird durch Vergleich der gespeicherten Bereichsgröße und der relativen Adresse ermittelt.

Es ist deshalb Aufgabe der Erfindung, eine Adress-Steuerung für First in-/First out-Speicher anzugeben, die es erlaubt, Speicherbereiche anzuwählen, innerhalb derer dann sequentielle Einschreib-/Auslesevorgänge möglich sind.

Diese Aufgabe wird erfindungsgemäß nach Patentanspruch 1 bzw. 2 gelöst. Es wird zu Beginn des Einschreib- oder Lesevorganges eine Startadresse vorgegeben, die beispielsweise ein Zählwert sein kann, da der Adresszeiger eines FIFO in der Regel aus einem Zähler besteht. Mit Beginn des Schreib-/Lesevorganges erhöht dieser Adresszähler seinen Zählwert jeweils nach dem Beschreiben oder Auslesen eines Speicherplatzes. Gleichzeitig läuft ein zweiter Zähler mit, dessen Zählbereich variabel festgelegt werden kann und der die Größe des anzusprechenden Speicherbereiches angibt. Erreicht dieser zweite Zähler seinen Endwert, wird ein Steuersignal abgefragt, das angibt, ob der bearbeitete Speicherbereich wiederholt bearbeitet werden soll, ob ein neuer Speicherbereich bearbeitet werden soll oder ob der nächste Speicherbereich zu bearbeiten ist. In allen Fällen beginnt der zweite Zähler wieder seinen Zählbereich abzuzählen, wobei der Zählbereich durch Vorgabe eines neuen Grenzzählwertes verändert sein kann. Für den Fall, daß ein neuer Speicherbereich bearbeitet werden soll, wird ein neuer Startwert für den Adress-Zähler vorgegeben und in einen Zwischenspeicher abgelegt. Der im Zwischenspeicher abgelegte Wert dient als Rücksprungadresse für den Fall, daß ein Speicherbereich mehrmals hintereinander ausgelesen bzw. beschrieben werden soll. In diesem Fall wird nach der Bearbeitung des ausgewählten Bereiches der Adress-Zähler mit dem Wert aus dem Zwischenspeicher geladen, so daß der Bereich wiederholt bearbeitet wird.

Soll nach der Abarbeitung eines Bereiches der anschließende Bereich bearbeitet werden, dann wird der Adress-Zähler nicht manipuliert, sondern er führt seinen Zählvorgang ohne Unterbrechung weiter. Jedoch wird nach Erreichen des Endwertes des zweiten Zählers, d.h. nach dem Ende des abgearbeiteten Bereiches und somit bei Beginn des neuen Zählvorganges des zweiten Zählers, d.h. mit Beginn der Abarbeitung des nächsten Bereiches, der an dieser Stelle auftretende Zählwert des Adress-Zählers als neue Rücksprungsadresse in den Zwischenspeicher abgelegt.

In einer vorteilhaften Ausgestaltung der Erfindung werden aus dem zweiten Zähler, welcher die Größe des zu bearbeitenden Bereiches angibt, Signale herausgeführt, z.B. eine oder mehrere Stellen des Zählers, welche angeben, in welchem Teilbereich des abzuarbeitenden Bereiches man sich gerade befindet.

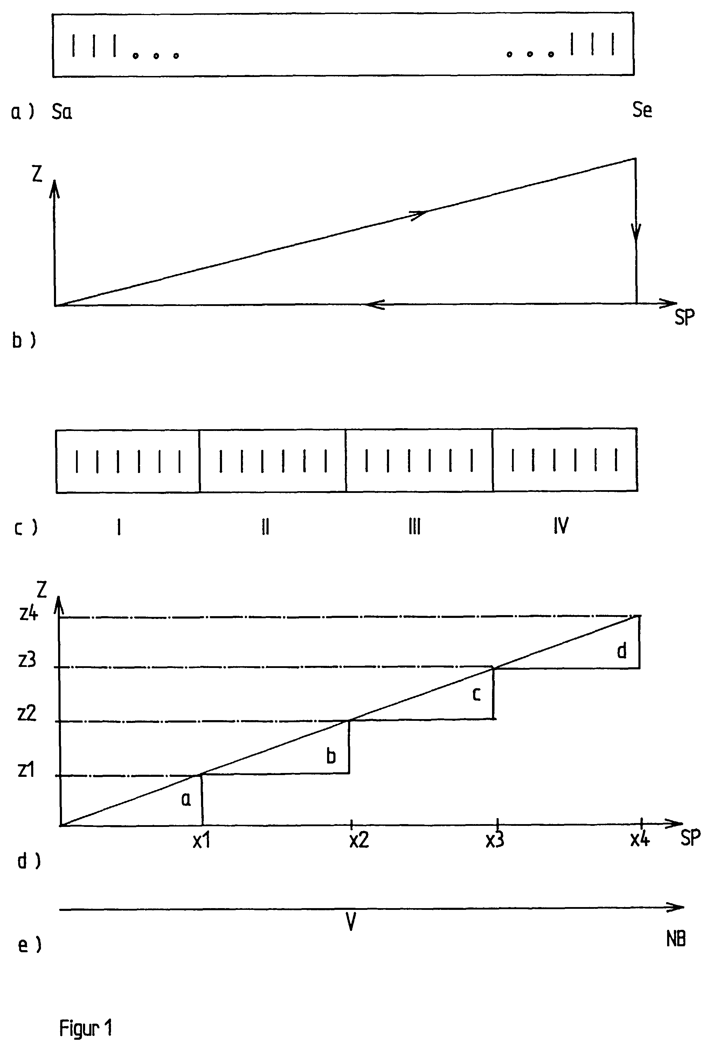

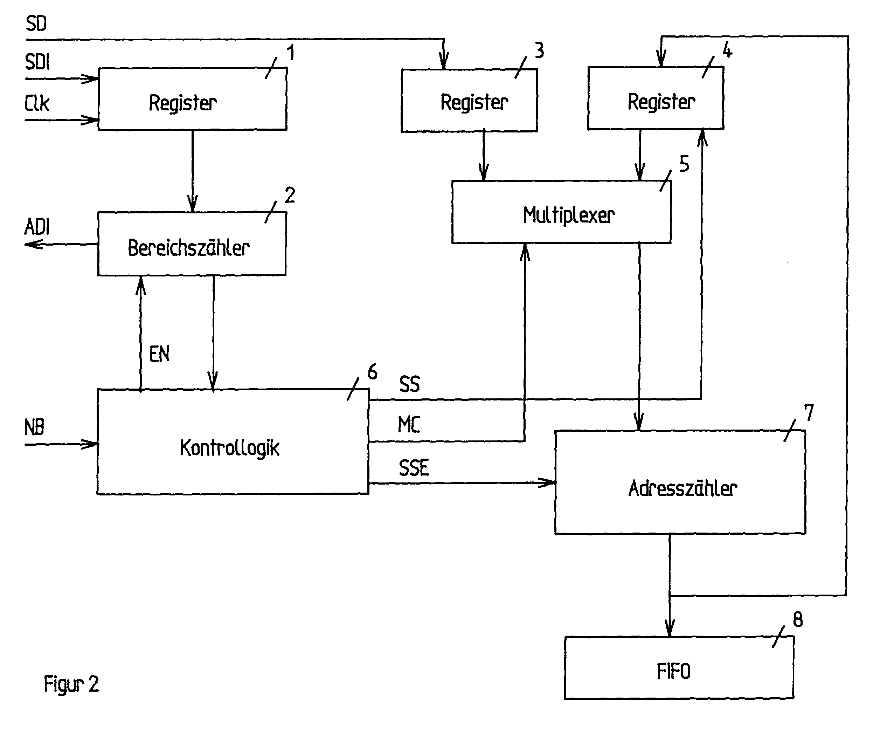

Im folgenden wird die Erfindung an Hand der Figuren 1 und 2 näher erläutert. Es zeigen:
- Figur 1: ein Diagramm, das die Adressierung der Speicherbereiche veranschaulicht
- Figur 2: ein Blockschaltbild einer erfindungsgemäßen Anordnung

Da die Vorgehensweise in Bezug auf die Ansteuerung von bestimmbaren Speicherbereichen eines FIFO-Speichers beim Schreib- und Lesevorgang gleich ist, wird in der folgenden Beschreibung ohne Einschränkung der Allgemeinheit auf den Auslesevorgang Bezug genommen.

In Figur 1a ist der gesamte Speicherbereich eines FIFO-Speichers dargestellt, wobei Sa den Speicheranfang und Se das Speicherende bezeichnen. Figur 1b zeigt den Zählverlauf Z eines Adress-Zählers eines FIFO-Speichers in Abhängigkeit des ausgelesenen Speicherplatzes SP vom Speicheranfang zum Speicherende. Zu Beginn des Auslesevorganges beginnt auch der Adress-Zähler mit seinem Zählvorgang. Der Zählwert wird zum Auslesen des jeweils nächsten Datenwortes erhöht. Ist der Adress-Zähler am Ende seines Zählbereiches angelangt, d.h. ist das Speicherende erreicht, dann wird der Zähler rückgesetzt und der Auslesevorgang beginnt von neuem beim Speicheranfang, sofern eine Leseanforderung vorliegt.

In Figur 1c ist der FIFO-Speicher in mehrere Speicherbereiche I bis IV unterteilt, die in der Figur die gleiche Größe haben, die aber auch verschieden groß sein können.

In Figur 1d ist die Zählweise bei Unterteilung in mehrere Speicherbereiche entsprechend Figur 1c dargestellt. Auch in diesem Fall umfaßt der Adress-Zähler einen Zählbereich, der der Speichergröße des FIFO-Speichers entspricht. Weiterhin umfaßt ein zweiter Zähler die Speichertiefe der ausgewählten Speicherbereiche I bis IV, wobei die Zähldreiecke mit a-d gekennzeichnet sind.

Bei Beginn eines Lesevorganges wird dem Adress-Zähler ein Startwert mitgeteilt und abgespeichert, beispielsweise Z₁ + 1, um den Speicherbereich II auszulesen. Sowohl der Adress-Zähler, als auch der zweite Zähler, d.h. der Bereichszähler, beginnen nun den Zählvorgang, d.h. sie erhöhen den Zählwert jeweils zum Auslesen des nächsten Speicherplatzes. Wenn der Bereichszähler seinen Endwert erreicht hat und somit der Adress-Zähler den Zählwert Z₂, wird der Bereichszähler zurückgesetzt, d.h. er beginnt einen neuen Zählvorgang, während der Adress-Zähler entsprechend einem Steuersignal NB, das in Figur 1e dargestellt ist, den Zählvorgang bei einer neuen Zähladresse beginnt. Wenn das Steuersignal NB gemäß Figur 1e vorliegt, wird der nächste Bereich ausgelesen, d.h. der Adress-Zähler zählt beim Zählwert Z₂ + 1 weiter, wobei dieser Zählwert abgespeichert wird, damit er abrufbar ist, falls der Bereich III wiederholt ausgelesen werden soll. Bei Vorliegen des Steuersignales NB kann bei Eingabe eines Zählwertes auch ein anderer als der nächstfolgende Bereich ausgelesen werden. So wird z.B. durch Eingabe des Zählwertes Z₃ + 1 statt des Bereiches III der Bereich IV ausgelesen. Liegt das Steuersignal NB nicht vor, dann wird der vorher ausgelesene Bereich erneut ausgelesen, d.h. wenn der Bereichszähler rückgesetzt wird, dann wird der Adress-Zähler auf den zuletzt abgespeicherten Startwert gesetzt und beginnt also von dort wieder seinen Zählvorgang.

Figur 2 zeigt ein Blockschaltbild einer Anordnung gemäß der Erfindung. Diese Anordnung enthält ein Bereichsregister 1, zu dem ein Taktsignal CLK und ein Datensignal SDI führt, und das mit einem Bereichszähler 2 verbunden ist. Vom Bereichszähler 2 sind ein oder mehrere Signale ADI herausgeführt, welche die momentane Zähltiefe des Bereichszählers 2 angeben. Weiterhin ist der Bereichszähler 2 mit einer FIFO-Adresskontroll-Logik 6 verbunden, die außerdem mit einem Steuersignal NB beaufschlagt ist. Von der FIFO-Adresskontroll-Logik führen die Steuersignale SSE an den FIFO-Adress-Zähler 7 und MC an den Multiplexer 5. Ein weiteres Steuersignal SS führt an ein Register 4. Die Anordnung enthält weiterhin ein Register 3, an das Daten über die Datenleitung SD geführt werden. Von den Registern 3 und 4 führt jeweils eine Datenverbindung zum Multiplexer 5, von dem eine Datenverbindung zum Adress-Zähler 7 führt. Der Zählerausgang des Adress-Zählers 7 führt zum FIFO-Speicher 8 und zum Register 4.

Die Versorgung mit dem Taktsignal CLK in Figur 2 ist der Einfachheit halber nur für das Register 1 eingezeichnet, es werden aber auch die übrigen Funktionselemente direkt oder indirekt mit diesem Taktsignal versorgt.

Mit einer Anordnung gemäß Figur 2 wird die an Hand der Figur 1 beschriebene Funktionsweise realisiert. Zu diesem Zweck wird in Register 1 über die serielle Datenleitung SDI ein Datenwort eingegeben, das einem Zählwert entspricht, der aus dem Register 1 in paralleler Form an den Bereichszähler 2 gegeben wird. Der Bereichszähler 2 beginnt beim Lesevorgang aus dem FIFO-Speicher 8 vom eingegebenen Zählwert an nach Null zu zählen, wobei die Zählweise von Null zum eingegebenen Zählwert ebenso denkbar ist. Nachdem der Zählbereich durchlaufen wurde, wird dies über eine Steuerleitung der Kontroll-Logik 6 mitgeteilt, und der Bereichszähler wird zurückgesetzt auf seinen Anfangswert und beginnt einen neuen Zählvorgang solange aus dem Speicher bereichsweise ausgelesen werden soll, d.h. solange er von der Kontroll-Logik mit einem Enable-Signal EN angesteuert wird. Als Anfangswert wird jeweils der aus dem Register 1 erhaltene Wert (bei Zählweise nach Null) genommen, d.h. nach jedem Auslesen eines Bereiches ist durch Eingabe eines neuen Anfangswertes über Register 1 die Bereichsgröße variierbar.

Durch das Register 1 und den Bereichszähler 2 wird also die Größe des zu durchlaufenden Speicherbereiches festgelegt. Beispielsweise kann bei einer Anwendung im Videobereich der FIFO-Speicher 8 als Bildspeicher eingesetzt werden, welcher mehrere Bilder abspeichern kann, so daß der Bereichszähler die Speichergröße eines Bildes oder eines Bildbereiches definieren kann.

Der Startwert für den Auslesevorgang aus dem FIFO-Speicher wird über die Register 3 bzw. 4 in serieller bzw. paralleler Form eingegeben und in paralleler Form über den Multiplexer 5 an den Adress-Zähler 7 gegeben. Der Adress-Zähler 7 muß also so ausgelegt sein, daß er seinen Zählvorgang bei einem beliebigen Wert, der von außen eingebbar ist, beginnt. Bei Vorliegen einer Ausleseanforderung wird zunächst ein Startwert, der in Register 3 abgelegt wird in den Adress-Zähler 7 eingelesen. Dazu wird der Multiplexer 5 von der Kontroll-Logik 6 so angesteuert, daß der Eingang, der mit dem Register 3 verbunden ist, durchgesteuert wird. Mit dem Steuersignal SSE wird der Adress-Zähler 7 zur Übernahme des Startwertes veranlaßt. Bei der ersten Ausgabe eines Adresszählwertes vom Adress-Zähler 7 an den FIFO-Speicher 8 zumm Auslesen eines Bereiches wird das Register 4 durch das Steuersignal SS veranlaßt, diesen Wert, der dem Startwert für einen Bereich entspricht, zu übernehmen. Ob nach der Abarbeitung eines Bereiches der Bereich erneut ausgelesen wird, ob der nächste Bereich oder ein entfernter Bereich ausgelesen wird, steuert die Kontroll-Logik 6 in Abhängigkeit vom Zustand des Steuersignales NB.

Wenn das wiederholte Auslesen eines Bereiches zu dem Zeitpunkt, an dem der Bereichszähler 2 seinen Endwert erreicht hat, angefordert wird, wird der Multiplexer 5 mit dem Steuersignal MC so angesteuert, daß der Wert, der in Register 4 abgespeichert ist, als neuer Startwert eingelesen wird. Der Adress-Zähler 7 wird durch das Steuersignal SSE zur Übernahme des Startwertes aus Register 4 aufgefordert, so daß der erste Speicherplatz des zuvor ausgelesenen Bereiches adressiert wird. Der Adresszähler zählt, ausgehend vom Startwert, weiter und der Bereichszähler 2 beginnt seinen Zählvorgang von neuem.

Wenn bei Erreichen des Endwertes des Bereichszählers 2 das Steuersignal NB der Art ist, daß der an den zuvor ausgelesenen Bereich anschließende Bereich ausgelesen werden soll, dann wird zu dem Zeitpunkt, an dem der erste Zählwert des neuen Bereiches an dem FIFO-Speicher 8 anliegt, mit dem Steuersignal SS der Kontroll-Logik 6 das Register 4 zur Übernahme dieses Zählwertes veranlaßt. Der Adress-Zähler 7 hingegen zählt normal weiter.

Für den Fall, daß nach der Abarbeitung eines Bereiches das Steuersignal NB die Abarbeitung eines vom zuletzt abgearbeiteten Bereiches entfernten Bereiches angefordert wird, wird der Adresszähler mit dem Steuersginal SSE zur Übernahme eines Startwertes aufgefordert, gleichzeitig wird der Multiplexer 5 mit dem Steuersignal MC so angesteuert, daß der Inhalt des Registers 3 an den Adress-Zähler 7 geleitet wird. Dabei ist dem Register 3 zuvor ein Zählwert einzugeben, der dem Beginn des gewünschten auszulesenden Bereiches entspricht.

Mit einer derartigen erfindungsgemäßen Anordnung können die Vorteile eines FIFO-Speichers genutzt werden, wobei zusätzlich ein gezielter Zugang zu bestimmbaren Speicherbereichen möglich ist.

In einer vorteilhaften Ausgestaltung der Erfindung können aus dem Bereichszähler 2 Signale ADI herausgeführt werden, die mit beliebiger Genauigkeit angeben, an welcher Stelle des ausgelesenen Zählbereiches man sich befindet. Beispielsweise kann durch Herausführen von zwei Stellen des Zählers der abzuarbeitende Bereich in vier Teilbereiche gegliedert werden. Die herausgeführten Signale geben jeweils den Teilbereich an, der momentan ausgelesen wird. Diese Signale können als Steuersignale für andere Funktionseinheiten oder zur Anzeigesteuerung usw. benutzt werden.

## Patentansprüche

1. Verfahren zum Auslesen oder Einschreiben von Daten aus bzw. in vorbestimmbare Speicherbereiche eines First in-/First out-Speichers, der einen Adress-Zähler enthält, welcher den zu bearbeitenden Speicherplatz definiert, wobei jeder Speicherbereich mehrere Speicherplätze umfaßt, **dadurch gekennzeichnet,** , daß
- dem Adress-Zähler (7) ein Startwert vorgegeben wird, bei dem der Zählvorgang beginnt,
- dieser Startwert automatisch in einem Zwischenspeicher (4) abgelegt wird,
- die zu bearbeitende Bereichsgröße durch einen Bereichszähler (2) festgelegt wird, der mit dem Adress-Zähler mitläuft,
- nach der Bearbeitung des vorgegebenen Bereiches und abhängig von einem Steuersignal (NB) entweder der Adress-Zähler (7) zum wiederholten Bearbeiten des Bereiches auf den im Zwischenspeicher (4) abgelegten Wert rückgesetzt wird oder der Adress-Zähler (7) mit einer neuen Startadresse zur Bearbeitung eines neuen Bereiches beaufschlagt wird.

2. Anordnung zum Auslesen oder Einschreiben von Daten aus bzw. in vorbestimmbare Speicherbereiche eines First in-/First out-Speichers (8), der einen Adress-Zähler (7) enthält, welcher den zu bearbeitenden Speicherplatz definiert, wobei jeder Speicherbereich mehrere Speicherplätze umfaßt,
**dadurch gekennzeichnet ,** daß die Anordnung
- ein erstes Register (1) zur Vorgabe eines Zählwertes für den Bereichszähler (2), welcher die Größe des zu bearbeitenden Speicherbereiches angibt, und
- ein zweites Register (3) zur Vorgabe eines Startzählwertes für den Adress-Zähler (7) und ein drittes Register (4) zur Abspeicherung eines weiteren Startzählwertes für die wiederholte Abarbeitung eines Bereiches und
- einen Multiplexer (5) zur Durchleitung eines Startwertes von den beiden letztgenannten Registern (3, 4) zum Adress-Zähler (7) und
- eine Kontroll-Logik (6) zur Steuerung des Bereichszählers (2), des Multiplexers (5), des Adress-Zählers (7), sowie des letztgenannten Registers (4) enthält, wobei die Kontroll-Logik (6) nach der Bearbeitung des vorgegebenen Bereiches und abhängig vom einem an die Kontroll-Logik gelieferten Steuersignal (NB) entweder den Adress-Zähler (7) zum wiederholten Bearbeiten des Bereiches auf den im dritten Register (4) abgelegten Wert rücksetzt oder den Adress-Zähler (7) mit einer im zweiten Register (3) gespeicherten neuen Startadresse zur Bearbeitung eines neuen Bereiches beaufschlagt.

3. Anordnung nach Anspruch 2,
**dadurch gekennzeichnet** , daß aus dem Bereichszähler (2) Datenleitungen (ADI) herausgeführt sind, welche den Teilzählbereich des Bereichszählers anzeigen.

## Claims

1. Method for reading data out of or writing data into predeterminable memory areas of a first in/first out memory which contains an address counter which defines the memory location to be processed, each memory area comprising a plurality of memory locations, characterized in that
- a starting value at which the counting operation starts is specified for the address counter (7),
- said starting value is automatically stored in a temporary memory (4),
- the size of the area to be processed is determined by an area counter (2) which runs concomitantly with the address counter,
- after processing the specified area and depending on a control signal (NB) the address counter (7) is either reset for reprocessing the area for the value stored in the temporary memory (4) or a new starting address is applied to the address counter (7) for the purpose of processing a new area.

2. Arrangement for reading data out of or writing data into predeterminable memory areas of a first in/first out memory (8) which contains an address counter (7) which defines the memory location to be processed, each memory area comprising a plurality of memory locations, characterized in that the arrangement
- contains a first register (1) for specifying a counter value for the area counter (2) which specifies the size of the memory area to be processed, and
- a second register (3) for specifying a starting counter value for the address counter (7) and a third register (4) for storing a further starting counter value for the reworking of an area and
- a multiplexer (5) for conveying a starting value from the two registers last mentioned (3, 4) to the address counter (7) and
- a control logic (6) for controlling the area counter (2), the multiplexer (5), the address counter (7), and also the register (4) last mentioned, in which connection, after processing the specified area and depending on a control signal (NB) supplied to the control logic, the control logic (6) either resets the address counter (7) for reprocessing the area for the value stored in the third register (4) or applies a new starting address stored in the second register (3) to the address counter (7) for the purpose of processing a new area.

3. Arrangement according to Claim 2, characterized in that data lines (ADI) which indicate the counter subarea of the area counter are brought out of the area counter (2).

## Revendications

1. Procédé pour la lecture ou l'écriture de données dans des zones pouvant être prédéterminées d'une mémoire First in-/First out (premier entré - premier sorti) qui contient un compteur d'adresses, qui définit l'emplacement de mémoire devant être traité, chaque zone de la mémoire comprenant plusieurs emplacements de mémoire, caractérisé en ce que
- une valeur de départ, à laquelle le processus de comptage commence, est prédéterminée pour le compteur d'adresses (7),
- cette valeur de départ est mémorisée automatiquement dans une mémoire intermédiaire (4),
- la taille de zone à traiter est fixée par un compteur de zones (2), qui fonctionne conjointement avec le compteur d'adresses,
- après le traitement de la zone prédéterminée et en fonction d'un signal de commande (NB), le compteur d'adresses (7) est ramené à la valeur mémorisée dans la mémoire intermédiaire (4), pour le traitement réitéré de la zone où le compteur d'adresses (7) est chargé par une nouvelle adresse de départ pour le traitement d'une nouvelle zone.

2. Dispositif pour la lecture ou l'écriture de données dans des zones pouvant être prédéterminées d'une mémoire First in-/First out (8), qui contient un compteur d'adresses (7)qui définit un emplacement de mémoire devant être traité, chaque zone de la mémoire comportant plusieurs emplacements de mémoire, caractérisé en ce que le dispositif contient
- un premier registre (1) pour la prédétermination d'une valeur de comptage pour le compteur de zones (2), qui indique la taille de la zone à traiter de la mémoire, et
- un second registre (3) pour la prédétermination d'une valeur de calcul de départ pour le compteur d'adresses (7), un troisième registre (4) pour la mémorisation d'une autre valeur de comptage de départ pour le traitement répété d'une zone, et
- un multiplexeur (5) pour la transmission d'une valeur de départ depuis les deux registres (3,4) indiqués en dernier en direction du compteur d'adresses (7), et
- une logique de contrôle (6) pour commander le compteur de zones (2), le multiplexeur (5), le compteur d'adresses (7) ainsi que le registre (4) indiqué en dernier lieu, auquel cas après le traitement de la zone prédéterminée et en fonction d'un signal de commande (NB) envoyé à la logique de contrôle (6), cette dernière ramène le compteur d'adresses (7) à la valeur mémorisée dans le troisième registre (4), pour le traitement répété de la zone ou charge le compteur d'adresses (7) avec une nouvelle adresse de départ, mémorisée dans le second registre (3), pour le traitement d'une nouvelle zone.

3. Dispositif selon la revendication 2, caractérisé en ce que les lignes de transmission de données (ADI), qui indiquent la zone de comptage partielle du compteur de zones (2), s'étendent à partir de ce dernier.
